# EUROPÄISCHE PATENTSCHRIFT

(11) **EP 3 473 060 B1**
(45) Veröffentlichungstag und Bekanntmachung des Hinweises auf die Patenterteilung: **30.12.2020**
(21) Anmeldenummer: 17731866.4
(22) Anmeldetag: 16.06.2017
(51) Int. Cl.: H05B 45/44

(54) **ANORDNUNG UND VERFAHREN ZUM BETREIBEN VON LEDS**
ARRANGEMENT AND METHOD FOR OPERATING LEDS
DISPOSITIF ET PROCÉDÉ DE FONCTIONNEMENT DE DEL

(30) Priorität: 16.06.2016 DE 102016210736
(43) Veröffentlichungstag der Anmeldung: 24.04.2019
(73) Patentinhaber: Zumtobel Lighting GmbH, 6850 Dornbirn (AT)
(72) Erfinder: GAJDOS, David, 6850 Dornbirn (AT); STEFFENS, Thomas, 88161 Lindenberg im Allgäu (DE)
(74) Vertreter: Thun, Clemens
(86) Internationale Anmeldenummer: PCT/EP2017/064837
(87) Internationale Veröffentlichungsnummer: WO 2017/216377

(56) Entgegenhaltungen:
- US-A1- 2011 127 922
- US-A1- 2012 038 615
- US-A1- 2012 299 490
- US-A1- 2016 014 862
- US-A1- 2016 066 381
- US-A1- 2016 174 315

## Beschreibung

Die vorliegende Erfindung betrifft eine Anordnung zum Betreiben einer Vielzahl von Leuchtdioden bzw. LEDs sowie ein entsprechendes Verfahren hierfür. Insbesondere betrifft die Erfindung eine Anordnung, welche es ermöglicht, LEDs mit einer gleichgerichteten Wechselspannung direkt anzusteuern. Unter "direkt ansteuern" wird hierbei verstanden, dass bspw. kein vorgeschalteter Konverter zum Umsetzen einer eingangsseitigen Wechselspannung in eine Gleichspannung zum Betreiben der LEDs verwendet wird. Stattdessen kann bspw. die zentral zur Verfügung gestellte Versorgungswechselspannung unmittelbar zum Betreiben der LEDs genutzt werden.

Um einen optimalen Betrieb von Leuchtdioden bzw. LEDs gewährleisten zu können, sollten diese in geeigneter Weise mit Strom versorgt werden, also bei einer Spannung sowie mit einem Strom betrieben werden, der an die Bedürfnisse der LED-Anordnung entsprechend angepasst ist. Dies bedeutet, dass die letztendlich über jede einzelne LED abfallende Spannung idealerweise im Wesentlichen derjenigen Spannung entsprechen soll, bei der ein optimaler LED-Betrieb gewährleistet ist. Gleichzeitig sollte der Strom auf einem bestimmten vorgegebenen Wert eingestellt werden, was letztendlich zu einem LED-Betrieb mit hoher Effizienz führt.

Um einen LED-Betrieb entsprechend den obigen Bedingungen zu ermöglichen, kommen üblicherweise Betriebsgeräte in Form sog. Konverter zum Einsatz, welche die eingangsseitig anliegende Wechselspannung in einen entsprechenden Gleichstrom mit geeigneter Spannung umsetzen. Diese Konverter beinhalten entsprechende AC-DC-Wandler, die üblicherweise einen Schaltregler beinhalten, mit dessen Hilfe diese Ausgangsspannung auf einen gewünschten Wert eingestellt werden kann. Derartige Betriebsgeräte sind in unterschiedlichsten Varianten verfügbar und ermöglichen darüber hinaus auch - sofern gewünscht - ein Dimmen der LEDs, um die Helligkeit der Lichtabgabe flexibel anzupassen und ggf. auch die spektrale Zusammensetzung und damit die Farbe bzw. die Farbtemperatur des insgesamt abgegebenen Lichts zu verändern.

Auf der anderen Seite ist der Einsatz entsprechender Konverter mit einem erhöhten Aufwand (sowohl hinsichtlich der Kosten als auch des Platzbedarfs) verbunden, weshalb es wünschenswert wäre, LED-Anordnungen zu nutzen, die ohne den Einsatz eines entsprechenden Konverters unmittelbar an die allgemeine Versorgungsspannung angeschlossen werden können. Derartige Anordnungen werden als AC-LED-Module bezeichnet und erlauben es insbesondere auch dem Endverbraucher, LEDs vielseitiger einzusetzen.

Bekannte AC-LED-Module werden bspw. von den Firmen Seoul Semiconductor und Altoran vertrieben. In beiden Fällen beruht das Konzept zum Betreiben der LEDs auf dem Gedanken, die LEDs in mehrere Gruppen einzuteilen, die je nach aktueller Höhe der eingangsseitig anliegenden Wechselspannung in Serie miteinander verbunden werden. Abhängig von der Höhe der durch einen eingangsseitigen Gleichrichter gleichgerichteten Wechselspannung wird also eine unterschiedliche Anzahl von LED-Gruppen in Serie miteinander verschaltet, wobei sich die Anzahl mit zunehmender Spannung erhöht. Während bei niedriger Spannung nur eine geringe Anzahl von LEDs in Serie geschaltet ist, erhöht sich diese Anzahl bei höherer Spannung deutlich, sodass zumindest annähernd die mit der Versorgungsspannung verbundenen LEDs bei geeigneter Spannung betrieben werden. Dies hat zur Folge, dass die LEDs einer ersten Gruppe im Prinzip dauerhaft aktiviert sind, während hingegen andere Gruppen seltener bzw. nur sehr kurz in denjenigen Zeitbereichen aktiviert werden, in denen die Spannung im Bereich des Maximalwerts der Wechselspannung liegt. Eine entsprechende Anordnung zum Betreiben von LEDs ist beispielsweise auch in der DE 10 2015 202 814 A1 beschrieben.

Mit der oben beschriebenen Vorgehensweise wird also ermöglicht, auf einen Konverter zu verzichten, allerdings werden die LEDs in diesem Fall unterschiedlich stark belastet. Wie bereits erwähnt werden die LEDs einer Gruppe nahezu im Dauerbetrieb betrieben, während hingegen LEDs anderer Gruppen nur vorübergehend bzw. nur extrem kurz aktiviert und unmittelbar darauf wieder deaktiviert werden. Diese ungleiche Belastung wird allerdings als nachteilig angesehen, da sie einerseits zu stärkeren und ggf. für einen Beobachter wahrnehmbaren Helligkeitsschwankungen bzgl. des insgesamt abgegebenen Lichts führt und andererseits die Gefahr besteht, dass einzelne LED-Gruppen vorzeitig ausfallen.

Aus der US 2011/0127922 A1 ist ein Verfahren zum Ansteuern mehrere LED-Gruppen bekannt, wobei die LED-Gruppen über eine ansteuerbare Schalteranordnung variabel miteinander gekoppelt werden können, um unterschiedliche Konfigurationen zu bilden. Dabei wird abhängig von der zur Verfügung stehenden Eingangsspannung eine für den aktuellen Spannungswert geeignete Konfiguration gewählt. Eine vergleichbare Lösung ist auch aus der US 2012/0299490 A1 und US 2016/066381 A1 bekannt.

Der vorliegenden Erfindung liegt die Aufgabenstellung zugrunde, ein weiter verbessertes Konzept zum Betreiben von LEDs zur Verfügung zu stellen, welches es insbesondere ermöglicht, LEDs unter Vermeidung eines Konverters zu betreiben. Die im Zusammenhang mit dem Stand der Technik geschilderten Nachteile sollten hierbei jedoch möglichst vermieden und die gleichmäßige Lichtabgabe optimiert werden.

Die Aufgabe wird durch eine Anordnung zum Betreiben von LEDs mit den Merkmalen des Anspruchs 1 sowie durch ein Verfahren gemäß Anspruch 9 gelöst. Vorteilhafte Weiterbildungen der Erfindung sind Gegenstand der abhängigen Ansprüche.

Die erfindungsgemäße Lösung beruht zunächst wiederum auf dem Gedanken, die zu betreibenden LEDs in LED-Gruppen einzuteilen, deren Verschaltung allerdings während des Betriebs untereinander dynamisch zu verändern. Innerhalb einer Sinushalbwelle der Versorgungsspannung ändert sich beispielsweise hierbei die Topologie der Verschaltung der Gruppen untereinander von einer Parallelschaltung über mehrere Parallel-Seriell-Schaltungen auf eine reine Seriell-Schaltung und wieder zurück, wobei jedoch im Gegensatz zu der aus dem Stand der Technik bekannten Lösung immer alle LED-Gruppen Bestandteil der hieraus resultierenden und mit der Spannung versorgten LED-Anordnung sind. Während also beim Stand der Technik abhängig von der Höhe der Versorgungsspannung einzelne LED-Gruppen hinzugefügt wurden, wird gemäß der vorliegenden Erfindung lediglich die Art der Verschaltung der LED-Gruppen untereinander derart angepasst, dass ein dauerhafter Betrieb aller LEDs ermöglicht wird, solange die Versorgungsspannung größer ist als die Vorwärtsspannung der größten individuell schaltbaren LED-Gruppe. Sämtliche LEDs werden in diesem Fall idealerweise über eine Sinushalbwelle der Versorgungsspannung gesehen im Wesentlichen gleich stark belastet, auch wenn zu individuellen Zeitpunkten unterschiedliche Belastungen vorhanden sein können. Die im Wesentlichen gleichmäßige Belastung der LEDs sorgt einerseits für ein besseres Erscheinungsbild hinsichtlich der Lichtabgabe und andererseits dafür, dass die Gefahr, dass eine einzelne LED-Gruppe vorzeitig durch Beschädigung ausfällt, reduziert wird. Um hierbei kontinuierlich einen Betrieb der LEDs zu ermöglichen, ist ferner die Verwendung eines Kondensators vorgesehen, der abhängig vom Spannungswinkel der Eingangsspannung geladen wird, wobei der Kondensator während der Nulldurchgänge der Eingangsspannung die LEDs versorgt.

Vorzugsweise wird hierbei in einem vorgegebenen Bereich der Eingangsspannung eine Ansteuerung derart vorgenommen, dass jeweils drei von vier LED-Gruppen in Serie verschaltet sind, wobei in einem ersten Zeitabschnitt der Ansteuerung in diesem Bereich der Eingangsspannung einer ersten LED-Gruppe eine zweite LED-Gruppe parallel geschaltet ist und in einem zweiten Zeitabschnitt der Ansteuerung in diesem Bereich der Eingangsspannung einer dritten LED-Gruppe eine vierte LED-Gruppe parallel geschaltet ist. Es wird somit in dieser Phase zusätzlich auch variiert welche Gruppen Bestandteil der Parallelschaltung sind, so dass eine besonders gelichmäßig Auslastung und Lichtabgabe erzielt wird.

Gemäß der vorliegenden Erfindung wird also eine Anordnung zum Betreiben von LEDs vorgeschlagen, welche zumindest zwei Gruppen von LEDs, eine steuerbare Schalteranordnung zum veränderbaren Verschalten der LED-Gruppen untereinander sowie eine Steuerschaltung umfasst, welche dazu ausgebildet ist, die Schalteranordnung abhängig von der Eingangsspannung der Anordnung anzusteuern, um die Verschaltung der LED-Gruppen untereinander dynamisch zu verändern, wobei wie bereits erwähnt grundsätzlich alle LED-Gruppen zu einer mit der ggf. gleichgerichteten Eingangsspannung betriebenen LED-Anordnung verbunden sind. Das ist ferner vorgesehen, dass die Anordnung einen Kondensator aufweist, der abhängig vom Spannungswinkel der Eingangsspannung geladen wird, wobei der Kondensator während der Nulldurchgänge der Eingangsspannung die LEDs versorgt.

Auch die vorliegende erfindungsgemäße Lösung erlaubt es, die LEDs derart zu betreiben, dass die individuell über eine LED abfallende Spannung im Wesentlichen der Vorwärtsspannung der LED entspricht, also einen im Wesentlichen optimalen LED-Betrieb ermöglicht. Die aus dem Stand der Technik bekannten und oben beschriebenen Nachteile können jedoch in vorteilhafter Weise vermieden werden und es wird eine besonders gleichmäßige Lichtabgabe erzielt.

Die LED-Gruppen, deren Verschaltung erfindungsgemäß dynamisch modifiziert wird, können hierbei in einfacher Weise jeweils identisch ausgeführt sein, wobei bspw. jede LED-Gruppen durch einen seriellen LED-Strang gebildet ist. Eine derartige Konfiguration ist allerdings nicht zwingend erforderlich und es wäre auch denkbar, die verschiedenen LED-Gruppen unterschiedlich zu gestalten und/oder einzelne LED-Gruppen durch Parallelschaltungen von LEDs zu realisieren.

Die steuerbare Schalteranordnung, mit deren Hilfe das dynamische Verändern der Verschaltung der LED-Gruppen untereinander realisiert wird, kann bspw. in Form einer Matrixschaltung realisiert sein, welche mehrere entsprechende Optokoppler oder vergleichbare Schaltelemente beinhaltet. Diese sind mit den Ein- und Ausgängen der verschiedenen LED-Gruppen in geeigneter Weise verbunden und ermöglichen je nach Ansteuerung dann ein paralleles und/oder serielles Verschalten der LED-Gruppen. Das Ansteuern der Schaltungsanordnung erfolgt, wie bereits erwähnt, durch eine entsprechende Steuerschaltung, die abhängig von der Höhe der Eingangsspannung eine geeignete Konfiguration für die LED-Gruppen festlegt und dann ein entsprechendes Ansteuern vornimmt. Anstelle der erwähnten Optokoppler könnten auch andere Schaltelemente wie MOSFET oder Bipolartransistoren eingesetzt werden. Diese werden dann vorzugsweise über eine entsprechende Treiberstufe angesteuert, da sich die Schaltelemente teilweise auf hohem Potential befinden. In einer Ausführungsform werden Optokoppler eingesetzt, bei denen auch die potentialgetrennte Treiberstufe integriert ist, zusätzlich zu dem Bipolartransistor, der das eigentliche Schaltelement bildet. Alternativ können allerdings bspw. auch Pegelversatzstufen oder Treiberstufen mit Transformatoren genutzt werden.

Bekanntlicherweise sollte für einen idealen LED-Betrieb nicht nur eine geeignete Spannung über die LEDs abfallen, sondern auch der Strom einen gewünschten Wert annehmen. Hierzu ist aus dem Stand der Technik bekannt, bspw. am Ausgang der zu betreibenden LED-Gruppe einen Stromregler bzw. eine entsprechende sog. Stromsenke anzuordnen, welche den Strom auf einen bestimmten Wert einstellt bzw. begrenzt. Auch bei der erfindungsgemäßen Anordnung können entsprechende Stromsenken vorgesehen sein, welche ebenfalls durch die Steuerschaltung angesteuert werden und abhängig von der Art und Weise der Verschaltung der LED-Gruppen untereinander betrieben werden. Dabei besteht die Möglichkeit, ausgangsseitig der durch die untereinander verschalteten LED-Gruppen insgesamt gebildeten LED-Anordnung einen einzelnen Stromregler bzw. eine Gruppe parallel geschalteter Stromregler vorzusehen. Alternativ hierzu kann allerdings auch vorgesehen sein, jeder LED-Gruppe unmittelbar einen Stromregler zuzuordnen, der dann den Stromfluss unmittelbar durch diese Gruppe entsprechend regelt. Wie nachfolgend noch näher erläutert wird, können hierbei die Stromregler auch in bestimmter Weise angesteuert werden, um während des Änderns der Verschaltungskonfiguration der LED-Gruppen untereinander kurzzeitig einen Stromfluss zu unterdrücken und hierdurch ein kurzes starkes Aufleuchten der LEDs zu vermeiden.

Die Ansteuerung der steuerbare Schalteranordnung mit vier LED-Gruppen kann mittels sechs Digitalausgängen der Steuerschaltung erfolgen.

Erfindungsgemäß wird ferner ein Verfahren zum Betreiben von LEDs vorgeschlagen, wobei die LEDs in zumindest zwei Gruppen unterteilt sind, wobei abhängig von einer Eingangsspannung die Verschaltung der LED-Gruppen untereinander dynamisch verändert wird, um eine LED-Anordnung zu bilden, und wobei alle LED-Gruppen Bestandteil der resultierenden LED-Anordnung sind. Dabei wird ein Kondensator abhängig vom Spannungswinkel der Eingangsspannung geladen, wobei der Kondensator während der Nulldurchgänge der Eingangsspannung die LEDs versorgt. Die Erfindung betrifft auch ein LED-Modul aufweisend eine erfindungsgemäße Anordnung, wobei die LED-Gruppen und die Schaltelemente der Schalteranordnung und vorzugsweise auch die Steuerschaltung in das LED-Modul integriert sind.

Das erfindungsgemäße Konzept erlaubt also insbesondere das Betreiben der LEDs durch eine gleichgerichtete Wechselspannung. Allerdings können die LEDs in gleicher Weise auch dann betrieben werden, wenn eingangsseitig eine Gleichspannung anliegt, was bspw. bei größeren Beleuchtungssystemen oftmals dann der Fall ist, wenn ein Notbetriebszustand vorliegt und die allgemeine Stromversorgung durch eine zentrale oder lokale Notstromversorgung abgelöst wird. In diesem Fall kann weiterhin ein LED-Betrieb ermöglicht sein, wobei dann ggf. vorgesehen sein kann, dass die Steuereinheit einen hierauf abgestimmten speziellen Betrieb der LEDs vornimmt.

Der Kondensator kann unabhängig von dem Stromreglungsmittel geladen werden, wobei der Strom zur Versorgung der LED-Gruppen durch das Stromreglungsmittel eingestellt werden kann, so dass die Versorgung der LED-Gruppen durch den Kondensator über das Stromreglungsmittel erfolgt, und eine von der Eingangsspannung phasenwinkelabhängige, spannungsabhängige, zeitabhänge und/oder sonstige Ansteuerung der Nachladung und / oder Entladung des Kondensators ermöglicht wird.

Sobald zumindest zeitweise die Vorwärtsspannung einer LED-Gruppe erreicht wird, kann somit ein Betrieb der LED-Gruppen ermöglicht werden, wodurch sowohl ein Betrieb der LED-Gruppen (sowohl bei Anliegen einer Wechselspannung als auch einer Gleichspannung als Eingangsspannung erfolgen kann, und es kann ein Betrieb der LED-Gruppen bei Anliegen einer Eingangsspannung im Bereich von 70V bis 230V erfolgen kann, und die Frequenz der Eingangsspannung kann variiert werden, diese kann vorzugsweise sowohl 50 Hz als auch 60 Hz betragen.

Die Erfindung wird durch die unabhängigen Ansprüche definiert. Zusätzliche Merkmale der Erfindung werden in den abhängigen Ansprüchen angegeben. Im Folgenden werden Teile der Beschreibung und Zeichnung, die sich auf Ausführungsformen beziehen, welche nicht in den Ansprüchen aufgeführt sind, nicht als Ausführungsformen der Erfindung angesehen, sondern als nützliche Beispiele zum Verständnis der Erfindung.

Nachfolgend soll die Erfindung anhand der beiliegenden Zeichnung näher erläutert werden. Es zeigen:
- Figur 1: ein erstes Ausführungsbeispiel einer erfindungsgemäßen Anordnung zum Betreiben von LEDs, wobei die LEDs in drei LED-Gruppen unterteilt sind;
- Figur 2: verschiedene Verschaltungszustände der LED-Gruppen untereinander abhängig von der Höhe der gleichgerichteten Eingangsspannung;
- Figur 3: schematisch die Anpassung des Spannungsbedarfs der durch die variabel miteinander verbundenen LED-Gruppen gebildeten LED-Anordnung;
- Figur 4: eine alternative Ausführungsform einer Anordnung zum Betreiben von LEDs;
- Figur 5: eine dritte Variante einer erfindungsgemäßen Anordnung zum Betreiben von LEDs;
- Figur 6: Möglichkeiten zum dynamischen Verschalten von vier LED-Gruppen abhängig von der Höhe der Eingangsspannung;
- Figuren 7a bis 7e: schematische Darstellungen des Ansteuerns der Schalteranordnung, um die in Figur 6 dargestellten Konfigurationen zu erzielen;
- Figuren 8a und 8b: das Ablaufdiagramm eines Verfahrens zum Ansteuern und dynamischen Verschalten der LED-Gruppen;
- Figur 9: eine weitere Variante einer erfindungsgemäßen Anordnung zum Betreiben von LEDs;
- Figur 10: Schema der Ansteuerung der Schalteranordnung des Beispiels der in Figur 9 dargestellten Konfigurationen; und
- Figur 11: Schema des Ablaufsteuerung der Ansteuerung der Schalteranordnung des Beispiels der in Figur 9 dargestellten Konfigurationen.

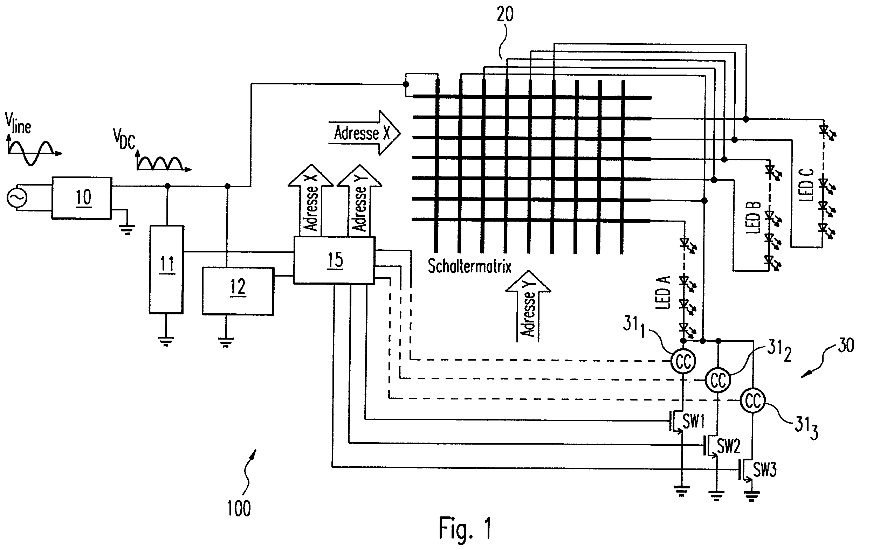

Figur 1 zeigt ein erstes Ausführungsbeispiel einer erfindungsgemäßen, allgemein mit dem Bezugsreichen 100 versehenen Anordnung zum Betreiben von LEDs. Im dargestellten Ausführungsbeispiel ist eine Konfiguration von drei LED-Gruppen LED A, LED B und LED C dargestellt, wobei - wie nachfolgend noch näher erläutert - das Konzept selbstverständlich auf eine größere Anzahl von LED-Gruppen erweitert werden kann. Ferner wird der Einfachheit halber im Folgenden davon ausgegangen, dass alle drei LED-Gruppen identisch ausgeführt sind und jeweils durch einen seriellen LED-Strang mit einer identischen Anzahl von identischen LEDs gebildet sind. Auch dies ist allerdings nicht zwingend erforderlich, sondern die LED-Gruppen könnten auch jeweils unterschiedlich hinsichtlich der Anzahl und Anordnung der LEDs ausgeführt sein. Möglich wäre beispielsweise ohne weiteres auch, dass jede Einzel-LED-Gruppe durch eine Parallelschaltung von zwei seriellen LED-Strängen gebildet ist.

Die erfindungsgemäße Anordnung 100 dient wie bereits erwähnt dazu, die LEDs ohne den Einsatz eines AC/DC-Konverters betreiben zu können. D.h., die eingangsseitig anliegende Versorgungsspannung Vₗᵢₙₑ wird im Wesentlichen unverändert den LEDs zugeführt. Eine Einschränkung besteht lediglich dahingehend, dass die Anordnung 100 eingangsseitig einen Gleichrichter 10 aufweist, mit dessen Hilfe die Eingangsspannung Vₗᵢₙₑ grundsätzlich in eine Spannung gleichbleibender Polarität gleichgerichtet wird. Die resultierende Spannung V_{DC} weist allerdings nach wie vor die für eine Versorgungswechselspannung typische Welligkeit auf und schwankt zwischen dem Wert 0 und dem Maximalwert der Eingangsspannung Vₗᵢₙₑ.

Erfindungsgemäß ist wie bereits geschildert vorgesehen, die drei LED-Gruppen LED A, LED B und LED C derart dynamisch miteinander zu verschalten bzw. zu koppeln, dass die resultierende LED-Anordnung für einen Betrieb entsprechend dem aktuellen Wert der gleichgerichteten Eingangsspannung V_{DC} geeignet ist. Dies wird mit Hilfe einer schematisch dargestellten Schalteranordnung 20 erreicht, welche eine Schaltermatrix bildet, die es ermöglicht, die Ein- und Ausgänge der drei LED-Gruppen LED A, LED B und LED C wahlweise und dynamisch miteinander zu verbinden. Die Schaltermatrix 20 weist also dementsprechend eine Mehrzahl steuerbarer Schaltelemente auf, die in geeigneter Weise von einer Steuerschaltung 15 angesteuert werden. Da das Ansteuern der Schaltelemente abhängig von der gleichgerichteten Versorgungsspannung V_{DC} erfolgen muss, ist ein Spannungsteiler 11 vorgesehen, der einen zur Ansteuerung der Schalteranordnung 20 erforderlichen Eingangswert für die Steuerschaltung 15 abgreift, welcher wiederum Rückschluss auf die Höhe der gleichgerichteten Versorgungsspannung V_{DC} zulässt. Parallel zum Spannungsteiler 11 befindet sich eine Stromversorgungseinheit 12, welche aus der gleichgerichteten Versorgungsspannung V_{DC} eine DC-Versorgungsspannung für einen die Steuereinheit 15 bildenden Mikroprozessor generiert. Diese kann gleichzeitig von der Steuerschaltung 15 als Referenzspannung zur Auswertung der Ausgangsspannung des Spannungsteilers 11 genutzt werden.

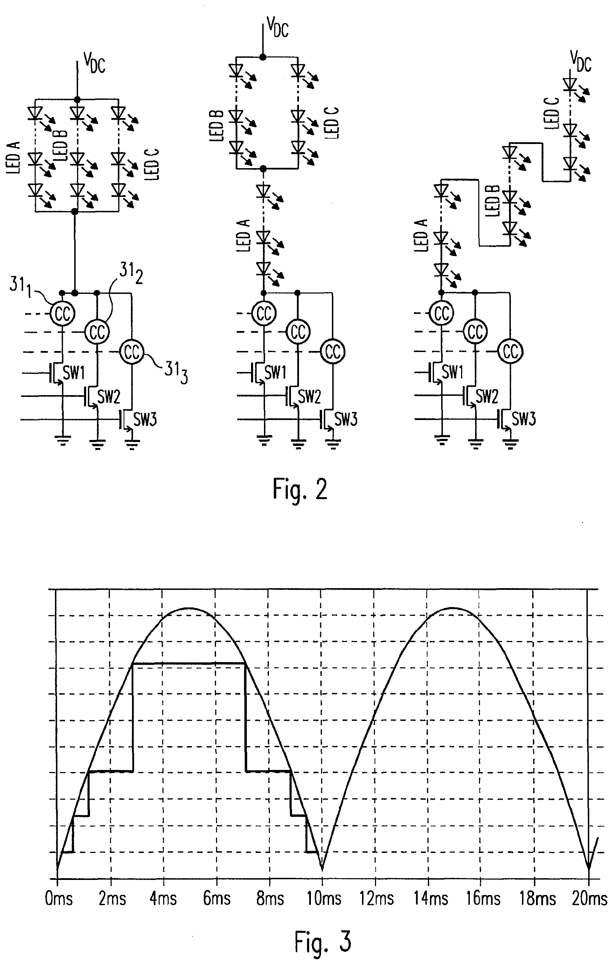

Das dynamische Verbinden der drei LED-Gruppen LED A, LED B und LED C untereinander erfolgt nunmehr derart, dass eine Verschaltung erzielt wird, welche für den aktuellen Wert der gleichgerichteten Eingangsspannung V_{DC} geeignet ist. Dieses Prinzip ist in Figur 2 dargestellt, wobei drei unterschiedliche Verschaltungskonfigurationen gezeigt sind, die abhängig von dem Wert der Spannung eingestellt werden.

Auf der linken Seite wird hierbei davon ausgegangen, dass zunächst ein niedriger Spannungswert vorliegt, wie dies beispielsweise in der Nähe des Null-Durchgangs der externen Versorgungsspannung Vₗᵢₙₑ der Fall ist. Da in diesem Fall nicht zu viele LEDs in Serie geschaltet sein sollten, um zu ermöglichen, dass trotz allem über jede individuelle LED eine für den Betrieb geeignete Spannung abfällt, die im Wesentlichen der Vorwärtsspannung der LED entspricht, werden die Schaltelemente der Schalteranordnung 20 durch die Steuerschaltung 15 derart angesteuert, dass die drei Gruppen LED A, LED B und LED C zu einer Parallelschaltung miteinander verbunden werden. Hier ist der Spannungsbedarf der insgesamt resultierenden Anordnung von LEDs am geringsten und jede LED kann trotz allem mit einer für den Betrieb geeigneten Spannung betrieben werden.

Steigt hingegen im Verlauf einer Halbwelle der Versorgungspannung Vₗᵢₙₑ die Spannung an, wird zu der in der Mitte von Figur 2 dargestellten Konfiguration gewechselt, bei der zwei LED-Gruppen (hier: LED B und LED C) parallel verschaltet sind und die dritte LED-Gruppe (LED A) in Serie zu dieser Parallelschaltung positioniert ist. Die Anzahl der insgesamt in Serie geschalteten LEDs wird hierdurch erhöht, was der Tatsache Rechnung trägt, dass nunmehr eine erhöhte Eingangsspannung für die LED-Anordnung zur Verfügung steht. Wiederum ist also gewährleistet, dass der Spannungsabfall über jede individuelle LED einem geeigneten Wert entspricht.

Steigt die Versorgungsspannung schließlich auf einen Wert im Bereich des Maximalwerts an, so wird zu der auf der rcchtcn Seite von Figur 2 dargestellten Verschaltungskonfiguration gewechselt, bei der die drei LED-Gruppen LED A, LED B und LED C in Serie miteinander verschaltet sind. Hier ist der Spannungsbedarf der resultierenden LED-Anordnung am höchsten.

Es ist also erkennbar, dass durch die Steuerschaltung 15 die Schaltelemente der Schalteranordnung 20 abhängig vom aktuellen Wert der gleichgerichteten Versorgungsspannung V_{DC} derart angesteuert werden müssen, dass jeweils eine für den aktuellen Spannungswert geeignete Verschaltung der LED-Gruppen zueinander realisiert wird, die es ermöglicht, dass über die einzelnen LEDs jeweils ein geeigneter Spannungsabfall erzielt wird. Grundsätzlich jedoch sind immer alle LED-Gruppen Bestandteil der resultierenden LED-Anordnung und dementsprechend alle LEDs bei Vorhandensein einer Eingangsspannung gleichzeitig aktiviert. Hierdurch wird nicht nur eine zeitlich gesehen gleichmäßigere Beleuchtung erzielt, sondern auch die Belastung der verschiedenen LED-Gruppen ist gleichmäßiger, was sich für einen langfristigen Betrieb der Anordnung äußerst positiv auswirkt.

Bekanntlicherweise sollte für einen optimierten LED-Betrieb auch der Strom, der durch die LEDs fließt, einen geeigneten Wert annehmen. Hierfür ist vorgesehen, am Ausgang der durch die drei LED-Gruppen LED A, LED B und LED C gebildeten LED-Anordnung Stromeinstellungsmittel 30 anzuordnen. Im dargestellten Ausführungsbeispiel handelt es sich um drei parallel geschaltete Konstantstromregler 31₁, 31₂ und 31₃, denen jeweils ein steuerbares Schaltelement SW1, SW2 bzw. SW3 z.B. in Form eines Transistors nachgeordnet ist. Im dargestellten Ausführungsbeispiel sind die Konstantstromregler 31₁, 31₂ und 31₃ nicht steuerbar ausgeführt, sondern derart ausgelegt, dass sie durch den zugeordneten Transistor SW1, SW2 bzw. SW3 entweder aktiviert oder deaktiviert werden können, wobei unter Deaktivieren zu verstehen ist, dass in diesem Fall kein Strom durch den entsprechenden Zweig fließt. Für den Fall, dass die drei Konstantstromregler 31₁, 31₂ und 31₃ identisch ausgeführt sind, kann dann also entsprechend der Anzahl der aktivierten Konstantstromregler 31₁, 31₂ und 31₃ der durch die LED-Anordnung fließende Strom in drei gleich großen Stufen verändert werden.

Das Ansteuern der Transistoren SW1, SW2 bzw. SW3 erfolgt ebenfalls durch die Steuerschaltung 15 und zwar abgestimmt auf die Verschaltung der LED-Gruppen untereinander LED A, LED B und LED C, wobei abhängig davon, wieviel LED-Gruppen parallel geschaltet sind, eine entsprechende Anzahl von Konstanstromregler aktiviert wird. Hierdurch ist sichergestellt, dass nicht nur der resultierende Spannungsabfall über jede individuelle LED sondern auch der entsprechende Stromfluss durch die LED einen für den LED-Betrieb geeigneten Wert annimmt. Der Spannungsbedarf der LED-Anordnung folgt also dann stufenartig dem Verlauf der zur Verfügung stehenden gleichgerichteten Versorgungsspannung V_{DC}, wie dies in Figur 3 gezeigt ist.

Die in Figur 1 dargestellten Transistoren SW1 bis SW3 dienen im oben beschriebenen Beispiel als reine Schaltelemente, mit deren Hilfe die Konstantstromregler 31₁, 31₂ und 31₃ wahlweise aktiviert oder deaktiviert werden können. Selbstverständlich wäre es alternativ hierzu auch möglich, schaltbare, also ansteuerbare Stromregler zu verwenden, welche dann jeweils - wie durch die gestrichelten Linien angedeutet - unmittelbar durch die Steuerschaltung 15 angesteuert werden können. In diesem Fall kann dann auf die zusätzlichen Transistoren SW1 bis SW3 als Schalter verzichtet werden. Ferner könnte in diesem Fall auch die Anordnung von drei parallel geschalteten Stromreglern durch einen einzigen ansteuerbaren Stromregler ersetzt werden, der allerdings dann derart ausgelegt sein muss, dass er in der Lage ist, für jede entsprechende Verschaltungskonfiguration der LED-Gruppen LED A, LED B und LED C untereinander einen entsprechend geeigneten Konstantstrom einzustellen zu können.

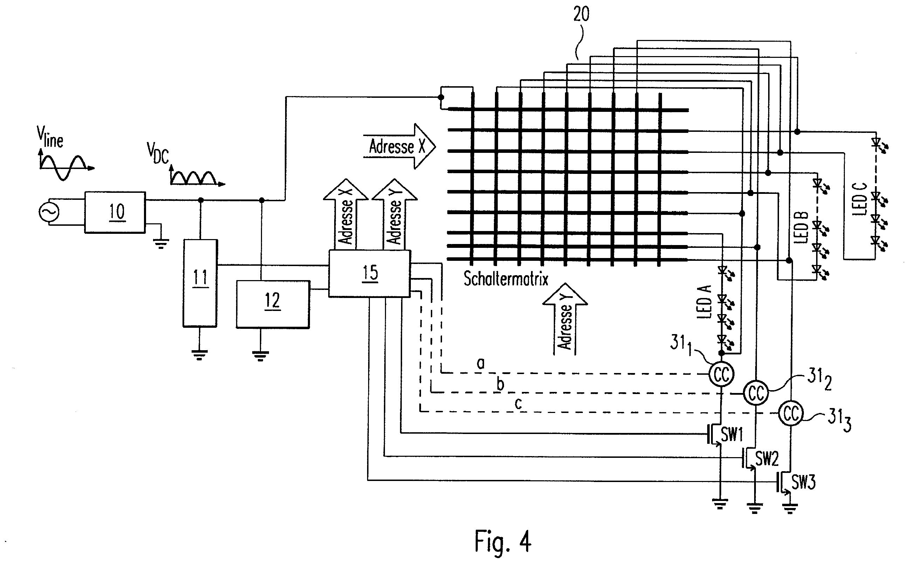

Figur 4 zeigt eine leicht abgewandelte Ausführungsform der erfindungsgemäßen Anordnung 100 von Figur 1. Diese unterscheidet sich darin, dass nunmehr die Mittel zur Stromeinstellung 30 nicht als Einheit am Ausgang der LED-Anordnung angeordnet sind, sondern stattdessen jedem LED-Strang bzw. jeder Gruppe LED A, LED B und LED C individuell ein Konstantstromregler 31₁, 31₂ bzw. 31₃ mit nachgeordnetem Schaltelement SW1, SW2 bzw. SW3 zugeordnet ist. Es gilt allerdings das Gleiche wie oben erwähnt, dass nämlich die Serienschaltung aus nicht steuerbarem Konstantstromregler und Schaltelement auch jeweils durch einen steuerbaren Stromregler ersetzt werden könnte.

Ein Vorteil der in Figur 4 dargestellten Variante besteht darin, dass ggf. auf die steuerbaren Schaltelemente SW1 bis SW3 auch verzichtet werden könnte, da ohnehin der dem LED-Strang unmittelbar zugehörige Konstantstromregler 31₁, 31₂ bzw. 31₃ jeweils zum Einstellen des entsprechenden Stroms aktiv sein muss. Die Anzahl der Steuerausgänge der Steuerschaltung 15 könnte auf diesem Weg also reduziert werden. Andererseits besteht in diesem Fall dann die Gefahr, dass bei Toleranzen der Stromregler untereinander die LED-Gruppen LED A, LED B und LED C unterschiedlich hell Licht abgeben. Auch liegt eine geringere Flexibilität hinsichtlich der Aktivierung der LED-Gruppen LED A, LED B und LED C vor.

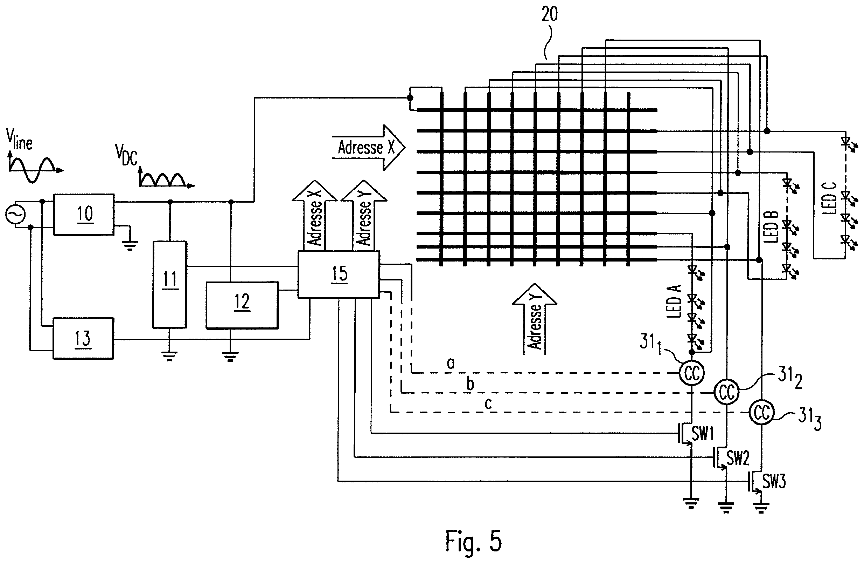

Figur 5 zeigt eine Weiterbildung des Ausführungsbeispiels von Figur 4, bei dem die Genauigkeit bei der Ansteuerung der Schalteranordnung 20 sowie der Schalter der Stromeinstellungsmittel 30 dadurch verbessert wird, dass zusätzlich mit Hilfe einer eingangsseitigen Einheit 13 ein Null-Durchgang der Versorgungsspannung Vₗᵢₙₑ erfasst wird. Diese Einheit 13 liefert ebenfalls ein Eingangssignal für die Steuerschaltung 15, welche darauf abgestimmt dann eine entsprechende Ansteuerung der steuerbaren Schaltungsanordung 20 vornimmt.

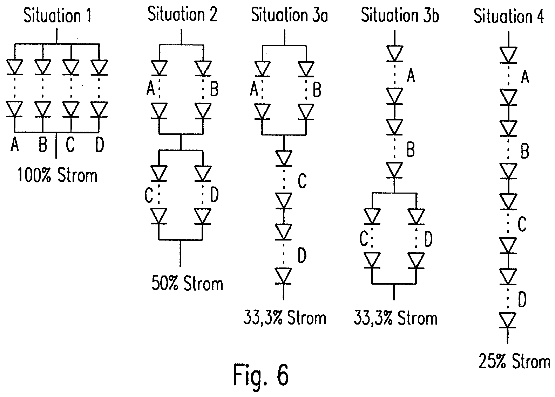

Figur 6 zeigt ein Beispiel eines erfindungsgemäßen Betriebs von vier LED-Gruppen. Dabei ist vorgesehen, dass die vier LED-Gruppen A bis D in vier unterschiedlichen Konfigurationen miteinander verschaltet werden können, wobei sich die vier Konfigurationen wiederum durch die Anzahl der in Serie geschalteten Gruppen unterscheiden. Die Konfigurationen bzw. Situation 3a und 3b sind diesbezüglich also gleichwertig, d.h., es sind jeweils drei LED-Gruppen in Serie verschaltet, wobei jedoch in einem Fall die ersten beiden Gruppen und im anderen Fall die letzten beiden Gruppen parallel gekoppelt sind. In der zweiten Konfiguration hingegen sind jeweils zwei LED-Gruppen parallel miteinander verbunden und die hieraus resultierenden Parallelschaltungen in Serie gekoppelt. Mit zunehmender gleichgerichteter Versorgungsspannung V_{DC} wird dann ausgehend von der linken Konfiguration (Situation 1) zu den weiter rechts befindlichen Konfigurationen gewechselt. Um eine gleichmäßige Verteilung der Belastung der LEDs sicherzustellen, wird dabei vorzugsweise alternierend zwischen den Konfigurationen 3a und 3b gewechselt, so dass die Vergleichmäßigung der LED-Belastung weiter verbessert werden kann. Das Prinzip ist allerdings das gleiche, wie dasjenige, welches anhand der vorherigen Figuren bereits erläutert wurde. Die Anzahl der in Serie geschalteten Gruppen wird also abhängig von der zur Verfügung stehenden gleichgerichteten Versorgungsspannung angepasst, um einen geeigneten Spannungsabfall über die LEDs erzielen zu können, wobei jedoch grundsätzlich alle LED-Gruppen aktiviert sind. Gezeigt ist in Figur 6 ferner auch der sich bei der jeweiligen Konfiguration ergebende Strombedarf, wobei die Angabe in Prozent bezogen auf den maximalen Bedarf dargestellt ist, der sich bei der linken bzw. ersten Konfiguration ergibt.

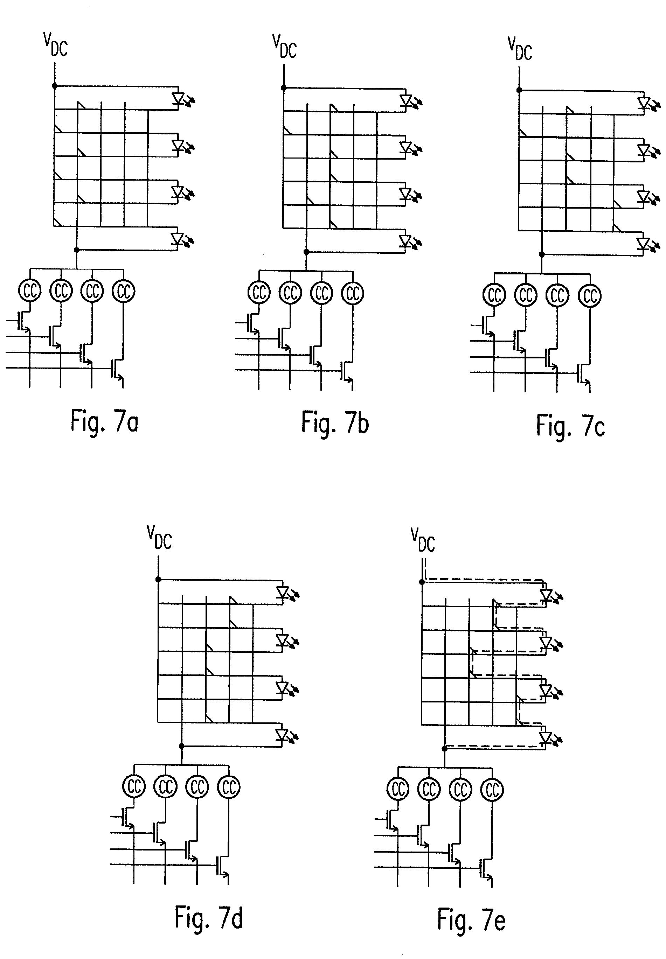

Somit ergibt sich für die Situationen 3a und 3b, dass zumindest vier LED-Gruppen LED A, LED B, LED C, LED D vorhanden sind und in einem vorgegebenen Bereich der Eingangsspannung zwei der vier LED-Gruppen parallel verschaltet sind und die Parallelschaltung dieser beiden LED-Gruppen in Serie mit den beiden weiteren LED-Gruppen verschaltet ist, wobei in einem ersten Zeitabschnitt dieses Bereichs einer ersten LED-Gruppe LED A eine zweite LED-Gruppe LED B parallel geschaltet ist und in einem zweiten Bereich der dritten LED-Gruppe LED C eine vierte LED-Gruppe LED D parallel geschaltet ist.
Die Funktionsweise der Schalteranordnung 20 soll nachfolgend näher anhand der Figuren 7a bis 7e erläutert werden. In diesem Fall ist jede LED-Gruppe durch eine einzelne LED schematisch dargestellt, wobei die Schalteranordnung 20 durch eine gitterartige Anordnung in der Zeichnung vertikal und horizontal verlaufender Leiterbahnen ausgeführt ist. Zwei sich kreuzende Leiterbahnen sind an den jeweiligen Kreuzungspunkten zunächst nicht elektrisch verbunden, wobei jedoch über an den Kreuzungspunkten positionierte steuerbare Schaltelemente eine elektrische Verbindung realisiert sein kann. Die Figuren 7a bis e zeigen dann für die in den Figuren 6 dargestellten verschiedenen Schaltungsvarianten, welche der jeweiligen Schaltelemente durch die Steuereinheit aktiviert sein müssen bzw. an welchen Kreuzungspunkten eine elektrische Verbindung vorliegen muss, um die gewünschte Schaltungskonfiguration zu erzielen. Der sich hierbei ergebende Stromfluß ist lediglich für die Situation 4 in Figur 7e durch eine gestrichelte Linie explizit dargestellt, in den weiteren Situationen ergibt er sich in analoger Weise.

Erkennbar ist, dass an einigen Kreuzungspunkten nicht zwingend Schaltelemente vorhanden sein müssen, da hier keine entsprechende Verbindung der sich kreuzenden Leiterbahnen erforderlich ist. Andere Kreuzungspunkte hingegen werden grundsätzlich gleichartig angesteuert, so dass letztendlich bei der dargestellten Ausführungsform mit vier LED-Gruppen die Steuerschaltung 15 acht Ausgänge zum Ansteuern der Schalteranordnung 20 - sowie vier weitere zum Ansteuern der Konstanstromregler - benötigt. Die dargestellte Variante ist allerdings nicht die einzige denkbare Lösung, sondern es wäre auch möglich, durch geschickte Ansteuerung der Schaltelemente die Anzahl der erforderlichen Steuerausgänge für die Schalteranordnung 20 auf sechs zu reduzieren.

Als steuerbare Schaltelemente können hierbei beispielsweise Optokoppler genutzt werden. Die Steuerschaltung 15, die weiteren Einheiten zur Erfassung der gleichgerichteten Versorgungsspannung sowie ggf. auch die Schaltelemente der Schalteranordnung 20 können hierbei in einer integrierten Schaltung, bspw. in einem Multi-Chip-Modul oder gemeinsames Halbleiter-Modul wie beispielsweise Hochvolttechnik-Modul, also bspw. als ein sog. ASIC, integriert werden, wobei jedoch auch die Möglichkeit besteht, die Schaltelemente (Schalter) in ein separates Modul (Halbleitermodul) auszulagern. Je nach Ausführungsform befinden sich dann an der integrierten Schaltung (dem ASIC) mit der Steuerschaltung entweder Ausgangsanschlüsse zum Ansteuern der Schaltelemente oder Ausgangsanschlüsse für die jeweils variabel miteinander zu verbindenden LED-Gruppen. Gemäß einer möglichen Ausführungsform können auch sowohl die LED-Gruppen LED A, LED B, LED C und LED D als auch die Schaltclcmcntc der Schaltcranordnung 20 und optional auch die Steuerschaltung 15 in einem gemeinsamen LED-Modul, beispielsweise als Multi-Chip-Modul oder gemeinsames Halbleiter-Modul wie beispielsweise Hochvolttechnik-Modul, integriert werden.

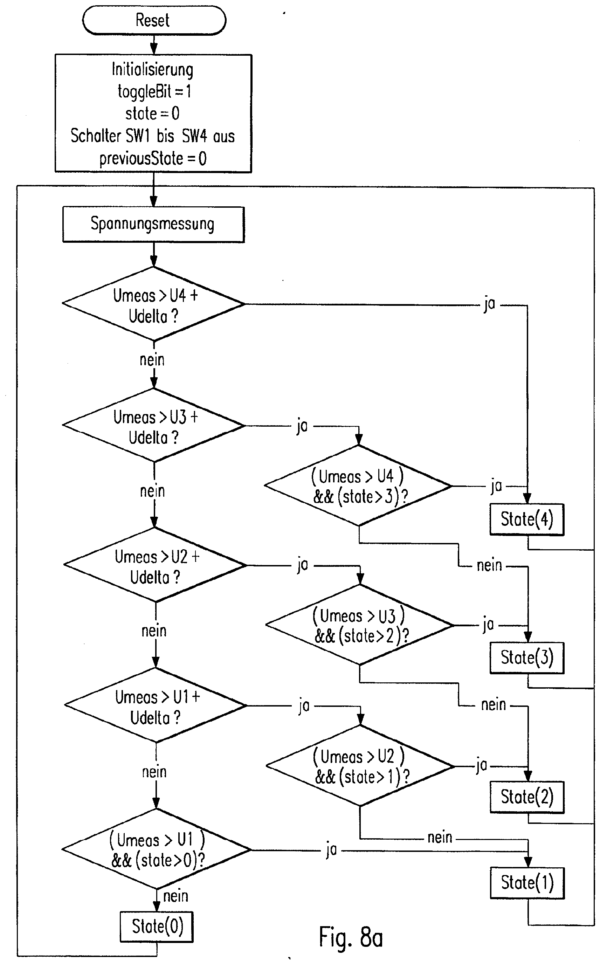

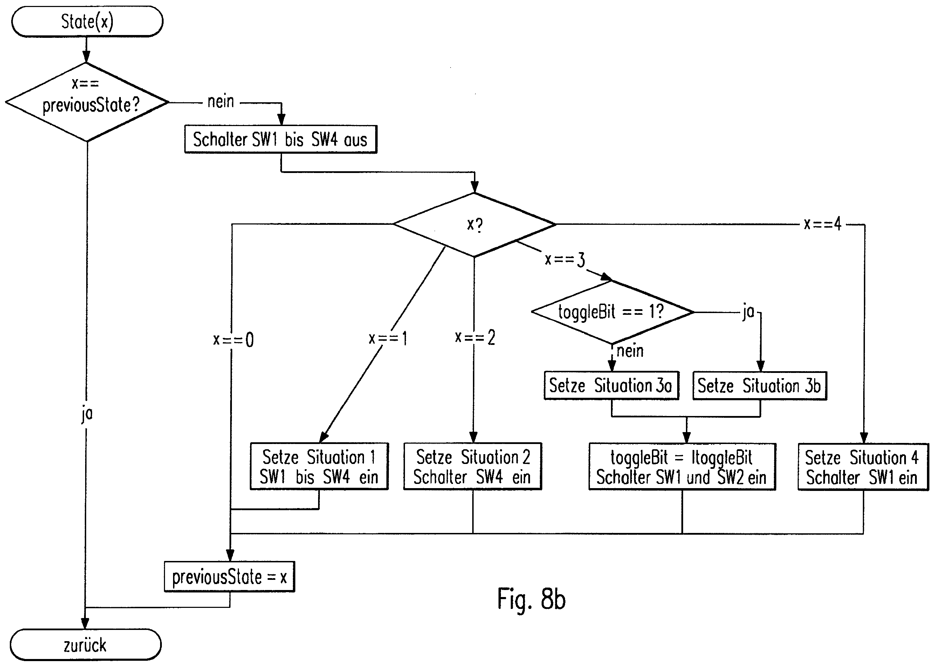

Das durch die Steuerschaltung 15 in Bezug auf die in den Figuren 6 und 7 dargestellte Variante mit vier LED-Gruppen durchgeführte Verfahren ist schematisch in den Figuren 8a und 8b dargestellt, wobei dieses - wie in Figur 8a gezeigt - in einer ersten Phase darin besteht, abhängig von der gemessenen gleichgerichteten Versorgungsspannung einen gewünschten Zustand (State (1) bis State (4)) hinsichtlich der Verschaltung der LED-Gruppen untereinander auszuwählen. Hierfür wird die gemessene Spannung jeweils mit Schwellwerten verglichen und bei Erkennen des Über- oder Unterschreitens bestimmter Schwellwerte dann auf einen neuen Zustand gewechselt.

Das Umsetzen des ausgewählten Zustands ist dann schematisch in Figur 8b dargestellt, wobei eine Besonderheit des dargestellten Verfahrens darin besteht, dass bei einem Wechsel eines Zustands einer Verschaltung auf einen neuen Verschaltungszustand die den Konstantstromreglern zugeordneten Schalter SW1 bis SW4 sehr kurz abgeschaltet werden, um während des Wechselns ein Aufblitzen der LEDs zu verhindern sowie ein gleichzeitiges Ansteuern der Schaltelemente der Schalteranordnung 20 zu ermöglichen. Erst nachdem die Schalteranordnung 20 entsprechend angesteuert und damit die LED-Gruppen in der gewünschten Weise miteinander verbunden werden, werden abhängig von der ausgewählten Schaltungskonfiguration dann wieder die den vier Stromreglern zugeordneten Schalter aktiviert und ein der gewählten Konfiguration entsprechender Stromfluss eingestellt. Dabei ist im vorliegenden Fall vorgesehen, dass die in den Figuren 7a und 7b dargestellten Stromregler nicht jeweils den gleichen Strom einstellen sondern - wiederum bezogen auf den maximalen Stromfluß - folgenden Anteil einstellen:

| | |
|---|---|
| SW1: | 25% |
| SW2: | 8,33% |
| SW3: | 16,67% |
| SW4: | 50% |

Hierdurch kann durch Ansteuern der Schalter SW1 bis SW4 entsprechend dem Diagramm in Figur 8b der Stromfluß auf den jeweiligen in Figur 6 dargestellten erforderlichen Wert eingestellt werden. Dieses Beispiel zeigt also, dass die Stromregler nicht zwingend identisch ausgeführt sein müssen.

Weiterhin ist in Figur 8b erkennbar, dass durch das alternierende Setzen eines Kontrollbits abwechselnd zwischen den Schaltungskonfigurationen 3a und 3b (siehe Figur 6) gewechselt wird, um die gleichmäßige Belastung der verschiedenen LED-Gruppen weiter zu optimieren.

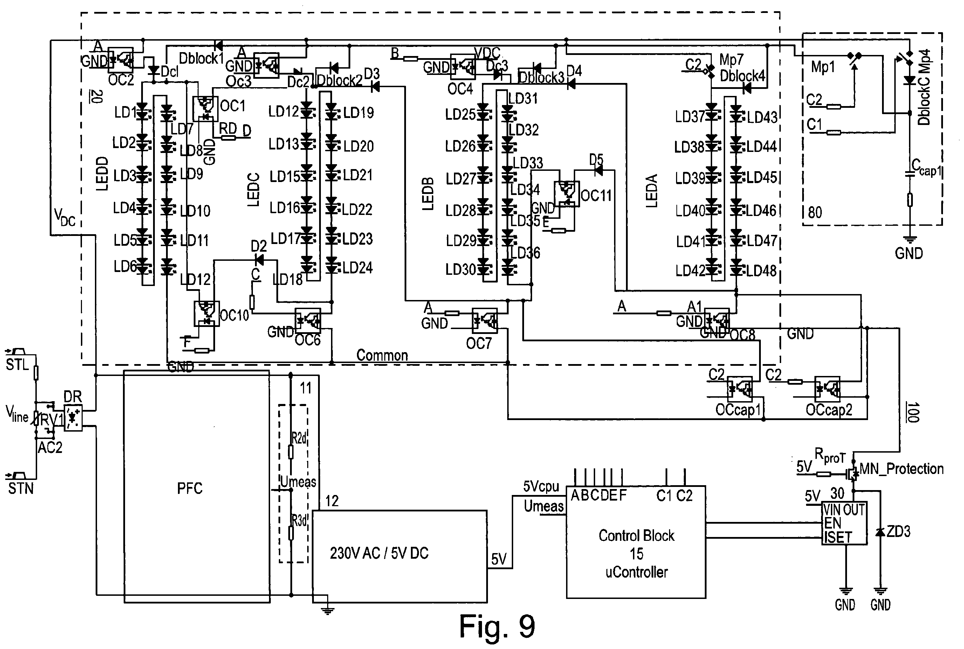

Figur 9 zeigt ein weiteres Ausführungsbeispiel einer erfindungsgemäßen, allgemein mit dem Bezugsreichen 100 versehenen Anordnung zum Betreiben von LEDs. Im dargestellten Ausführungsbeispiel ist eine Konfiguration von vier LED-Gruppen LED A, LED B, LED C und LED D dargestellt, wobei - wie bereits erläutert - das Konzept selbstverständlich auf eine größere Anzahl von LED-Gruppen erweitert werden kann oder auch analog zu den Beispielen der Figuren 1 bis 5 auf drei LED-Gruppen reduziert werden kann. Bei diesem Beispiel sind die vier LED-Gruppen identisch ausgeführt und jeweils durch einen seriellen LED-Strang mit einer identischen Anzahl von identischen LEDs gebildet sind.

Die erfindungsgemäße Anordnung 100 dient wie bereits erwähnt dazu, die LEDs ohne den Einsatz eines AC/DC-Konverters betreiben zu können. D.h., die eingangsseitig anliegende Versorgungsspannung Vₗᵢₙₑ wird im Wesentlichen unverändert den LEDs zugeführt. Eine Einschränkung besteht lediglich dahingehend, dass die Anordnung 100 eingangsseitig einen Gleichrichter 10 aufweist, mit dessen Hilfe die Eingangsspannung Vₗᵢₙₑ grundsätzlich in eine Spannung gleichbleibender Polarität gleichgerichtet wird. Die resultierende Spannung V_{DC} weist allerdings nach wie vor die für eine Versorgungswechselspannung typische Welligkeit auf und schwankt zwischen dem Wert 0 und dem Maximalwert der Eingangsspannung Vₗᵢₙₑ. Optional kann auf den Gleichrichter 10 eine aktive oder passive Leistungsfaktorkorrekturschaltung (PFC) wie beispielsweise eine Passive-Valley-Fill Schaltung als folgen. Die Passive-Valley-Fill Schaltung kann beispielsweise durch zwei parallel angeordnete Speicherkondensatoren CPF1 und CPF2 gebildet werden, wobei jeweils in Serie zu den beiden Speicherkondensatoren CPF1 und CPF2 jeweils eine Sperrdiode DPF2 und DPF3 angeordnet ist. Die Sperrdiode DPF2 und DPF3 ist jeweils derart angeordnet, dass nur eine direkte Entladung der Speicherkondensatoren CPF1 und CPF2 hin zur positiven Eingangsspannung V_{DC} möglich ist. Zwischen den beiden Speicherkondensatoren CPF1 und CPF2 ist eine Nachladediode DPF1 angeordnet, die von ihrer Polarität derart angeordnet ist, dass eine Nachladung der beiden Speicherkondensatoren CPF1 und CPF2 von der positiven Eingangsspannung V_{DC} über die Nachladediode DPF1 erfolgt. Auf diese Weise sind die beiden Speicherkondensatoren CPF1 und CPF2 zum Nachladen in Serie geschaltet und zum Entladen parallel geschaltet.

Erfindungsgemäß ist wie bereits geschildert vorgesehen, die vier LED-Gruppen LED A, LED B, LED C und LED D derart dynamisch miteinander zu verschalten bzw. zu koppeln, dass die resultierende LED-Anordnung für einen Betrieb entsprechend dem aktuellen Wert der gleichgerichteten Eingangsspannung V_{DC} geeignet ist. Dies wird mit Hilfe einer schematisch dargestellten Schalteranordnung 20 erreicht, welche eine Schaltermatrix bildet, die es ermöglicht, die Ein- und Ausgänge der vier LED-Gruppen LED A, LED B, LED C und LED D wahlweise und dynamisch miteinander zu verbinden. Die Schaltermatrix 20 weist also dementsprechend eine Mehrzahl steuerbarer Schaltelemente OC1, OC2, OC3, OC4, OC6, OC7, OC8, OC10 und OC11 auf, die in geeigneter Weise von einer Steuerschaltung 15 angesteuert werden. Wie bereits erläutert, werden die Schaltelemente vorzugsweise aus Optokopplern gebildet. Da das Ansteuern der Schaltelemente abhängig von der gleichgerichteten Versorgungsspannung V_{DC} erfolgen muss, ist ein Spannungsteiler 11 vorgesehen, der einen zur Ansteuerung der Schalteranordnung 20 erforderlichen Eingangswert für die Steuerschaltung 15 abgreift, welcher wiederum Rückschluss auf die Höhe der gleichgerichteten Versorgungsspannung V_{DC} zulässt. Parallel zum Spannungsteiler 11 befindet sich eine Stromversorgungseinheit 12, welche aus der gleichgerichteten Versorgungsspannung V_{DC} eine DC-Versorgungsspannung für einen die Steuereinheit 15 bildenden Mikroprozessor generiert. Diese kann gleichzeitig von der Steuerschaltung 15 als Referenzspannung zur Auswertung der Ausgangsspannung des Spannungsteilers 11 genutzt werden.

Das dynamische Verbinden der vier LED-Gruppen LED A, LED B, LED C und LED D untereinander erfolgt nunmehr derart, dass eine Verschaltung erzielt wird, welche für den aktuellen Wert der gleichgerichteten Eingangsspannung V_{DC} geeignet ist. Dieses Prinzip ist in Figur 6 dargestellt und wurde bereits erläutert, wobei fünf unterschiedliche Verschaltungskonfigurationen gezeigt sind, die abhängig von dem Wert der Spannung eingestellt werden.

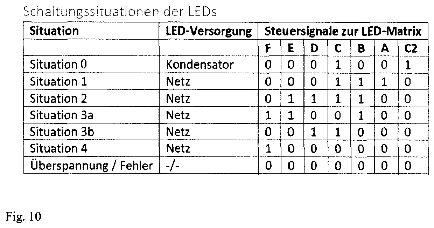

Vorzugsweise werden die steuerbaren Schaltelemente OC1, OC2, OC3, OC4, OC6, OC7, OC8, OC10 und OC11 mittels der Steuerschaltung 15 angesteuert. Dabei können vorzugsweise einzelne Ansteuersignale miteinander kombiniert werden. Beispielsweise können die Schaltelemente OC2, OC3, OC7 und OC8 durch ein gemeinsames Steuersignal A mittels der Steuerschaltung 15 angesteuert werden. Ein beispielhaftes Schaltschema zur Ansteuerung der Schaltermatrix 20 mit den steuerbaren Schaltelementen OC1, OC2, OC3, OC4, OC6, OC7, OC8, OC10 und OC11 mit den von der Steuerschaltung 15 ausgegebenen Steuersignalen ist in Fig. 10 dargestellt. Wie in diesem Beispiel zu erkennen ist, kann die Ansteuerung der steuerbare Schaltcranordnung 20 mit vier LED-Gruppen LED A, LED B, LED C, LED D mittels sechs Digitalausgängen der Steuerschaltung 15 erfolgen.

Es ist also erkennbar, dass durch die Steuerschaltung 15 die Schaltelemente der Schalteranordnung 20 abhängig vom aktuellen Wert der gleichgerichteten Versorgungsspannung V_{DC} derart angesteuert werden müssen, dass jeweils eine für den aktuellen Spannungswert geeignete Verschaltung der LED-Gruppen zueinander realisiert wird, die es ermöglicht, dass über die einzelnen LEDs jeweils ein geeigneter Spannungsabfall erzielt wird. Grundsätzlich jedoch sind immer alle LED-Gruppen Bestandteil der resultierenden LED-Anordnung und dementsprechend alle LEDs bei Vorhandensein einer Eingangsspannung gleichzeitig aktiviert. Hierdurch wird nicht nur eine zeitlich gesehen gleichmäßigere Beleuchtung erzielt, sondern auch die Belastung der verschiedenen LED-Gruppen ist gleichmäßiger, was sich für einen langfristigen Betrieb der Anordnung äußerst positiv auswirkt.

Zum Schutz der steuerbaren Schaltelemente vorzugsweise Optokoppler können Blockierungsdioden Dc1, Dc2 und Dc3 in Serie zum dem Schaltelement und den LED-Gruppen angeordnet sein.

Bekanntlicherweise sollte für einen optimierten LED-Betrieb auch der Strom, der durch die LEDs fließt, einen geeigneten Wert annehmen. Hierfür ist vorgesehen, am Ausgang der durch die vier LED-Gruppen LED A, LED B, LED C und LED D gebildeten LED-Anordnung Stromeinstellungsmittel 30 anzuordnen. Im dargestellten Ausführungsbeispiel handelt es sich um einen einstellbaren Konstantstromregler 30, dem ein einstellbarer Referenzwert durch die Steuerschaltung 15 vorgegeben werden kann. Im dargestellten Ausführungsbeispiel ist der Konstantstromregler 30 steuerbar ausgeführt. Es kann also entsprechend dem durch die Steuerschaltung 15 vorgegebenen einstellbaren Referenzwert durch den Konstantstromregler 30 der durch die LED-Anordnung fließende Strom in verschiedenen Stufen verändert werden.

Die Vorgabe des einstellbaren Referenzwert erfolgt durch die Steuerschaltung 15 und zwar abgestimmt auf die Verschaltung der vier LED-Gruppen untereinander LED A, LED B, LED C und LED D, wobei abhängig davon, wieviel LED-Gruppen parallel geschaltet sind, ein entsprechender Stromwert für den Konstanstromregler 30 vorgegeben wird. Hierdurch ist sichergestellt, dass nicht nur der resultierende Spannungsabfall über jede individuelle LED sondern auch der entsprechende Stromfluss durch die LED einen für den LED-Betrieb geeigneten Wert annimmt. Der Spannungsbedarf der LED-Anordnung folgt also dann stufenartige dem Verlauf der zur Verfügung stehenden gleichgerichteten Versorgungsspannung V_{DC}, wie dies in Figur 3 gezeigt ist.

Zusätzlich kann Schalteranordnung 20 eine steuerbare Ladeschaltung 80 hinzugefügt werden. Diese steuerbare Ladeschaltung 80 kann beispielsweise dafür genutzt werden, um beim Nulldurchgang der Versorgungsspannung, also bei sehr geringer Amplitude der gleichgerichteten Versorgungsspannung V_{DC}, eine Speisespannung für den Betrieb der vier LED-Gruppen LED A, LED B, LED C und LED D bereitzustellen.

Zur Nachladung der steuerbaren Ladeschaltung 80 kann über das Steuersignal C1 durch die Steuereinheit 15 der Schalter MP4 eingeschalten werden. Durch Einschalten des Schalters MP4 ist eine Nachladung des Kondensators Ccap1 der steuerbaren Ladeschaltung 80 aus der gleichgerichteten Versorgungsspannung V_{DC} möglich. Dieses Nachladen erfolgt vorzugsweise, wenn die gleichgerichteten Versorgungsspannung V_{DC} eine ausreichend hohe Amplitude hat, also zumindest die Vorwärtsspannung einer einzelnen LED-Gruppe überschreitet. Durch Wegschalten des Steuersignals C1 wird der Schalter MP4 gesperrt und somit die Nachladung des Kondensators Ccap1 unterbrochen.

Eine Entladung der steuerbaren Ladeschaltung 80 kann über das Steuersignal C2 durch die Steuereinheit 15 erreicht werden. Durch das Steuersignal C2 wird einerseits der Schalter MP1 eingeschalten, der den Kondensator Ccap1 der steuerbaren Ladeschaltung 80 mit den LED-Gruppen LED A und LED B verbindet, und zudem zumindest eine LED-Gruppe LED A und / oder LED B mit ihrem Kathodenausgang über die Optokoppler OCap1 und / oder OCap2 mit Masse verbindet. Vorzugsweise wird das Steuersignal C2 durch die Steuereinheit 15 ausgegeben, wenn die gleichgerichtete Versorgungsspannung V_{DC} unterhalb der Vorwärtsspannung einer einzelnen LED-Gruppe liegt. Die Erkennung kann beispielsweise durch Überwachung der Amplitude der Versorgungsspannung V_{DC} erfolgen oder aber durch eine Nulldurchgangserkennung, wobei die Entladung in einer vorgegebenen Zeitphase nach dem Nulldurchgang aktiviert wird. Zusätzlich kann durch Ausgabe des Steuersignals C auch die LED-Gruppe LED D mit ihrem Kathodenausgang über den Optokoppler OC6 mit Masse verbunden werden.

Es wird ein Verfahren zum Betreiben von LEDs ermöglicht, wobei ein Kondensator Ccap1 abhängig vom Spannungswinkel der Eingangsspannung Vline geladen wird, und wobei der Kondensator Ccap1 abhängig von der Eingangsspannung Vline die LEDs versorgt, vorzugsweise während der Nulldurchgänge der Eingangsspannung Vline. Der Kondensator Ccap1 kann unabhängig von dem Stromreglungsmittel 30 geladen werden. Der Strom zur Versorgung der LED-Gruppen LED A, LED B, LED C, LED D wird durch das Stromreglungsmittel 30 eingestellt. Die Versorgung der LED-Gruppen LED A, LED B, LED C, LED D erfolgt durch den Kondensator Ccap1 über das Stromreglungsmittel 30, es kann also der Strom, welcher aus dem Kondensator Ccap1 die LED-Gruppen LED A, LED B, LED C, LED D speist, durch das Stromreglungsmittel 30 eingestellt werden. Es wird somit ein von der Eingangsspannung Vline phasenwinkelabhängige, spannungsabhängige, zeitabhänge und/oder sonstige Ansteuerung der Nachladung und / oder Entladung des Kondensators Ccap1 ermöglicht.

Es wird ein Betrieb der LED-Gruppen LED A, LED B, LED C, LED D ermöglicht, sobald zumindest zeitweise die Vorwärtsspannung einer LED-Gruppe LED A, LED B, LED C, LED D erreicht wird. Ein Betrieb der LED-Gruppen LED A, LED B, LED C, LED D kann sowohl bei Anliegen einer Wechselspannung als auch einer Gleichspannung als Eingangsspannung Vline erfolgen. Ein Betrieb der LED-Gruppen LED A, LED B, LED C, LED D kann bei Anliegen einer Eingangsspannung Vline im Bereich von 70V bis 230V erfolgen. Die Frequenz der Eingangsspannung Vline kann variiert werden bzw. muß nicht auf einen bestimmten Wert festgelegt sein, vorzugsweise kann sie sowohl 50 Hz als auch 60 Hz betragen.

Figur 10 zeigt ein Beispiel eines erfindungsgemäßen Betriebs von vier LED-Gruppen ähnlich wie das Beispiel der Figur 6. Es sind hier die Steuersignale der LED-Matrix, also für die Schaltelemente der Schaltermatrix 20, für die verschiedenen Situationen dargestellt, wie sie anhand der Beispiele der Figuren 6 und 9 erläutert wurden. Es können somit die vier LED-Gruppen A bis D in vier unterschiedlichen Konfigurationen miteinander verschaltet werden, wobei sich die vier Konfigurationen wiederum durch die Anzahl der in Serie geschalteten Gruppen unterscheiden.

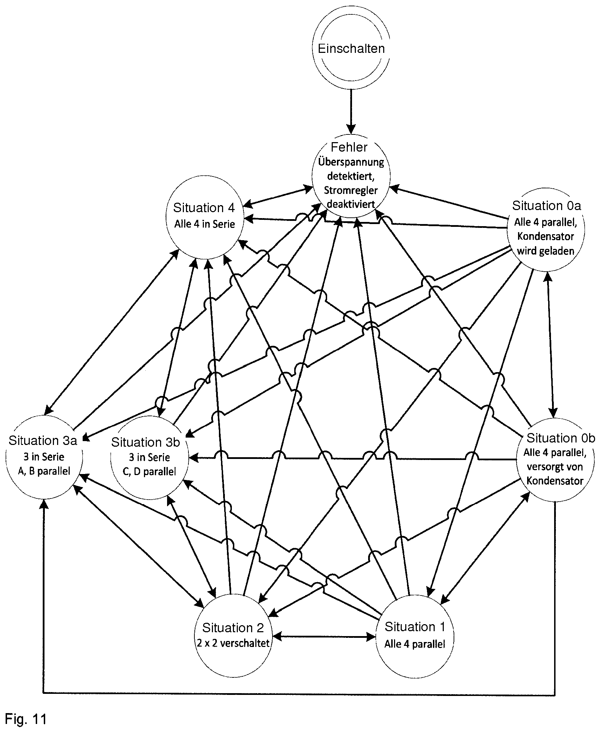

In Figur 11 ist schematisch eine Ablaufsteuerung der Ansteuerung der Schalteranordnung des Beispiels der in Figur 9 dargestellten Konfigurationen gezeigt. Im Fehlerfall, also beispielsweise bei Überspannung, können alle Steuersignale für die Schaltelemente der Schaltermatrix 20 deaktiviert werden, um die LED-Gruppen zu schützen. Zusätzlich oder alternativ kann das Stromreglungsmittel 30 deaktiviert werden.
Ein Vorteil der erfindungsgemäßen Lösung besteht übrigens auch darin, dass auch ein LED-Betrieb möglich ist, wenn am Eingang der Anordnung eine Gleichspannung anliegt, was beispielsweise in einem Notbetriebszustand der Fall sein könnte. Es muss dann lediglich eine der anliegenden Gleichspannung entsprechende Verschaltung der LED-Gruppen gewählt werden, die dann dauerhaft beibehalten wird. Die Anordnung ist also in der Lage, bei unterschiedlichsten Eingangsspannungen einen Betrieb der LEDs zu gewährleisten. Da die Funktionsweise insbesondere auch von der Frequenz der Versorgungsspannung unabhängig ist (sofern die Steuerschaltung und die Schaltelemente der Schalteranordnung ausreichend schnell arbeiten), kann die erfindungsgemäße Lösung bei unterschiedlichsten Versorgungsspannungen und Netzfrequenzen und damit auch in verschiedenen Ländern genutzt werden.

Insgesamt eröffnet also die erfindungsgemäße Lösung die Möglichkeit, LEDs ohne das vorherige Umsetzen einer Versorgungswechselspannung in eine Gleichspannung zu betreiben. Gegenüber aus dem Stand der Technik hierzu bekannten Lösungen wird dabei nochmals der LED-Betrieb optimiert, wobei das erfindungsgemäße Verfahren ohne weiteres auf eine höhere Anzahl von LED-Gruppen erweiterbar ist.

## Patentansprüche

1. Anordnung (100) zum Betreiben von LEDs, aufweisend
• zumindest vier Gruppen (LED A, LED B, LED C, LED D) von LEDs, wobei die LED-Gruppen (LED A, LED B, LED C, LED D) jeweils durch einen seriellen LED-Strang gebildet sind,
• eine steuerbare Schalteranordnung (20) zum veränderbaren Verschalten der LED-Gruppen (LED A, LED B, LED C, LED D) untereinander, um eine LED-Anordnung zu bilden, sowie
• eine Steuerschaltung (15), welche dazu ausgebildet ist, die Schalteranordnung (20) abhängig von einer Eingangsspannung (Vₗᵢₙₑ) der Anordnung (100) anzusteuern um die Verschaltung der LED-Gruppen (LED A, LED B, LED C, LED D) untereinander dynamisch zu verändern, und
• einen Kondensator (Ccap1), der abhängig vom Spannungswinkel der Eingangsspannung (Vₗᵢₙₑ) geladen wird, wobei der Kondensator (Ccap1) während der Nulldurchgänge der Eingangsspannung (Vₗᵢₙₑ) die LEDs versorgt
wobei die Steuerschaltung (15) dazu ausgebildet ist, die Schalteranordnung (20) derart anzusteuern, dass alle LED-Gruppen (LED A, LED B, LED C, LED D) Bestandteil der resultierenden LED-Anordnung sind,
**dadurch gekennzeichnet,**
**dass** die Schalteranordnung (20) durch eine Matrixschaltung von steuerbaren Schaltelementen gebildet ist, die mit den Ein- und Ausgängen der LED-Gruppen (LED A, LED B, LED C, LED D) verbunden sind, und
**dass** in einem vorgegebenen Bereich der Eingangsspannung (Vₗᵢₙₑ) die Steuerschaltung (15) dazu ausgebildet ist, die Schalteranordnung (20) derart anzusteuern, dass zwei der zumindest vier LED-Gruppen (LED A, LED B, LED C, LED D) parallel verschaltet sind und die Parallelschaltung der beiden LED-Gruppen in Serie mit allen weiteren LED-Gruppen verschaltet ist,
wobei in einem ersten Zeitabschnitt der Ansteuerung in diesem Bereich der Eingangsspannung (Vₗᵢₙₑ) einer ersten LED-Gruppe (LED A) eine zweite LED-Gruppe (LED B) parallel geschaltet ist und
in einem zweiten Zeitabschnitt der Ansteuerung in diesem Bereich der Eingangsspannung (Vₗᵢₙₑ) einer dritten LED-Gruppe (LED C) eine vierte LED-Gruppe (LED D) parallel geschaltet ist.

2. Anordnung nach Anspruch 1,
**dadurch gekennzeichnet,**
**dass** die Anordnung eine eingangsseitige Einheit (13) zur Erfassung eines Null-Durchgangs der Versorgungsspannung (Vₗᵢₙₑ) aufweist, wobei die Einheit (13) dazu ausgebildet ist, der Steuerschaltung (15) Signale zu schicken.

3. Anordnung nach Anspruch 1 oder 2,
**dadurch gekennzeichnet,**
**dass** die LED-Gruppen (LED A, LED B, LED C, LED D) identisch ausgeführt sind.

4. Anordnung nach einem der vorherigen Ansprüche,
**dadurch gekennzeichnet,**
**dass** diese zusätzlich Stromregelungsmittel (30) aufweist.

5. Anordnung nach Anspruch 4,
**dadurch gekennzeichnet,**
**dass** die Stromregelungsmittel (30) den einzelnen LED-Gruppen (LED A, LED B, LED C, LED D) individuell zugeordnete Mittel zur Konstantstromregelung umfassen.

6. Anordnung nach Anspruch 5,
**dadurch gekennzeichnet,**
**dass** die Stromregelungsmittel (30) der durch die LED-Gruppen (LED A, LED B, LED C, LED D) gebildeten LED-Anordnung vor- oder nachgeschaltete Mittel zur Konstantstromregelung umfassen.

7. Anordnung nach Anspruch 5 oder 6,
**dadurch gekennzeichnet,**
**dass** die Mittel zur Konstantstromregelung einen steuerbaren Konstantstromregler oder einen nicht steuerbaren Konstantstromregler, dem ein Schaltelement zugeordnet ist, umfassen.

8. Anordnung nach einem der Ansprüche 4 bis 7,
**dadurch gekennzeichnet,**
**dass** die steuerbaren Schaltelemente der Matrixschaltung dazu ausgebildet sind, die Ein- und Ausgängen der Stromregelungsmittel (30) zu verbinden.

9. Verfahren zum Betreiben von LEDs,
• wobei die LEDs in zumindest vier Gruppen (LED A, LED B, LED C, LED D) unterteilt sind, und wobei die LED-Gruppen (LED A, LED B, LED C, LED D) jeweils durch einen seriellen LED-Strang gebildet sind,
• wobei abhängig von einer Eingangsspannung (Vₗᵢₙₑ) eine Steuerschaltung (15) eine steuerbare Schalteranordnung (20) ansteuert, wobei je nach Ansteuerung die Verschaltung der LED-Gruppen (LED A, LED B, LED C, LED D) durch die steuerbare Schalteranordnung (20) untereinander dynamisch verändert wird, um eine LED-Anordnung zu bilden, und
• wobei alle LED-Gruppen (LED A, LED B, LED C, LED D) Bestandteil der resultierenden LED-Anordnung sind, und wobei ein Kondensator (Ccapl) abhängig vom Spannungswinkel der Eingangsspannung (Vₗᵢₙₑ) geladen wird, wobei der Kondensator (Ccap1) während der Nulldurchgänge der Eingangsspannung (Vₗᵢₙₑ) die LEDs versorgt,
**dadurch gekennzeichnet,**
**dass** eine Matrixschaltung von steuerbaren Schaltelementen, die mit den Ein- und Ausgängen der LED-Gruppen (LED A, LED B, LED C, LED D) verbunden sind, die Schalteranordnung bildet, und
wobei in einem vorgegebenen Bereich der Eingangsspannung (Vₗᵢₙₑ) zwei der zumindest vier
LED-Gruppen (LED A, LED B, LED C, LED D) parallel verschaltet sind und die Parallelschaltung der beiden LED-Gruppen in Serie mit allen weiteren LED-Gruppen verschaltet ist, wobei
in einem ersten Zeitabschnitt der Ansteuerung in diesem Bereich der Eingangsspannung (Vₗᵢₙₑ) einer ersten LED-Gruppe (LED A) eine zweite LED-Gruppe (LED B) parallel geschaltet ist und
in einem zweiten Zeitabschnitt der Ansteuerung in diesem Bereich der Eingangsspannung (Vₗᵢₙₑ) einer dritten LED-Gruppe (LED C) eine vierte LED-Gruppe (LED D) parallel geschaltet ist.

10. Verfahren nach Anspruch 9,
**dadurch gekennzeichnet,**
**dass** der durch die LED-Anordnung fließende Strom geregelt wird.

11. Verfahren nach Anspruch 10,
**dadurch gekennzeichnet,**
**dass** während eines Wechsels zwischen zwei verschiedenen Verschaltungszuständen der LED-Gruppen (LED A, LED B, LED C, LED D) ein Stromfluß vorübergehend unterbrochen wird.

12. Verfahren nach einem der Ansprüche 9 bis 11,
**dadurch gekennzeichnet,**
• **dass** der Kondensator (Ccap1) unabhängig von einem Stromreglungsmittel (30) geladen wird, wobei der Strom zur Versorgung der LED-Gruppen (LED A, LED B, LED C, LED D) durch das Stromreglungsmittel (30) eingestellt wird,
• **dass** die Versorgung der LED-Gruppen (LED A, LED B, LED C, LED D) durch den Kondensator (Ccap1) über das Stromreglungsmittel (30) erfolgt,
• und eine von der Eingangsspannung (Vₗᵢₙₑ) phasenwinkelabhängige, spannungsabhängige, zeitabhänge und/oder sonstige Ansteuerung der Nachladung und / oder Entladung des Kondensators (Ccap1) ermöglicht wird.

13. Verfahren nach einem der Ansprüche 9 bis 12,
wobei ein Betrieb der LED-Gruppen (LED A, LED B, LED C, LED D) ermöglicht wird, sobald zumindest zeitweise die Vorwärtsspannung einer LED-Gruppe (LED A, LED B, LED C, LED D) erreicht wird,
**gekennzeichnet dadurch,**
• **dass** ein Betrieb der LED-Gruppen (LED A, LED B, LED C, LED D) sowohl bei Anliegen einer Wechselspannung als auch einer Gleichspannung als Eingangsspannung (Vₗᵢₙₑ) erfolgen kann,
• und ein Betrieb der LED-Gruppen (LED A, LED B, LED C, LED D) bei Anliegen einer Eingangsspannung (Vₗᵢₙₑ) im Bereich von 70V bis 230V erfolgen kann,
und die Frequenz der Eingangsspannung (Vₗᵢₙₑ) variiert werden kann, vorzugsweise sowohl 50 Hz als auch 60 Hz betragen kann.

14. LED-Modul aufweisend eine Anordnung nach einem der Ansprüche 1 bis 8,
**dadurch gekennzeichnet,**
**dass** die Anordnung mit den LED-Gruppen (LED A, LED B, LED C, LED D) und die Schaltelemente der Schalteranordnung (20) und vorzugsweise auch die Steuerschaltung (15) in das LED-Modul integriert sind.

## Claims

1. Arrangement (100) for operating LEDs, comprising
• at least four groups (LED A, LED B, LED C, LED D) of LEDs, wherein the LED groups (LED A, LED B, LED C, LED D) are in each case formed by a serial LED string,
• a controllable switch arrangement (20) for variably interconnecting the LED groups (LED A, LED B, LED C, LED D) with one another to form an LED arrangement, and also
• a control circuit (15) which is designed to control the switch arrangement (20) as a function of an input voltage (Vₗᵢₙₑ) of the arrangement (100) in order to dynamically change the interconnection of the LED groups (LED A, LED B, LED C, LED D) with each other, and
• a capacitor (Ccap1) which is charged depending on the voltage angle of the input voltage (Vₗᵢₙₑ), wherein the capacitor (Ccap1) supplies the LEDs during the zero crossings of the input voltage (Vₗᵢₙₑ)
wherein the control circuit (15) is designed to control the switch arrangement (20) in such a way that all LED groups (LED A, LED B, LED C, LED D) are part of the resulting LED arrangement,
**characterized in that**
the switch arrangement (20) is formed by a matrix circuit of controllable switching elements which are connected to the inputs and outputs of the LED groups (LED A, LED B, LED C, LED D), and
**in that,** within a predetermined range of the input voltage (Vₗᵢₙₑ), the control circuit (15) is designed to actuate the switch arrangement (20) in such a way that two of the at least four LED groups (LED A, LED B, LED C, LED D) are connected in parallel, and the parallel connection of the two LED groups is connected in series with all further LED groups,
wherein a second LED group (LED B) is connected in parallel in a first time segment of the activation within this range of the input voltage (Vₗᵢₙₑ) of a first LED group (LED A), and
a fourth LED group (LED B) is connected in parallel in a second time segment of the activation within this range of the input voltage (Vₗᵢₙₑ) of a third LED group (LED A).

2. Arrangement according to Claim 1,
**characterized in that**
the arrangement has an input-side unit (13) for detecting a zero crossing of the supply voltage (Vₗᵢₙₑ), wherein the unit (13) is designed to send signals to the control circuit (15).

3. Arrangement according to Claims 1 or 2,
**characterized in that**
the LED groups (LED A, LED B, LED C, LED D) are of identical design.

4. Arrangement according to any one of the preceding claims,
**characterized in that**
this additionally comprises current regulating means (30).

5. Arrangement according to Claim 4,
**characterized in that**
the current regulating means (30) comprise means for constant current regulation which are individually associated with the individual LED groups (LED A, LED B, LED C, LED D).

6. Arrangement according to Claim 5,
**characterized in that**
the current regulating means (30) of the LED arrangement formed by the LED groups (LED A, LED B, LED C, LED D) comprise upstream or downstream means for constant current regulation.

7. Arrangement according to Claims 5 or 6,
**characterized in that**
the means for constant current regulation comprise a controllable constant current regulator or a non-controllable constant current regulator with which a switching element is associated.

8. Arrangement according to any one of Claims 4 to 7,
**characterized in that**
the controllable switching elements of the matrix circuit are designed to connect the inputs and outputs of the current regulating means (30).

9. Method for operating LEDs,
• wherein the LEDs are subdivided into at least four groups (LED A, LED B, LED C, LED D), and wherein the LED groups (LED A, LED B, LED C, LED D) are in each case formed by a serial LED string,
• wherein, depending on an input voltage (Vₗᵢₙₑ), a control circuit (15) drives a controllable switch arrangement (20), wherein, depending on the activation, the interconnection of the LED groups (LED A, LED B, LED C, LED D) with one another is dynamically changed by the controllable switch arrangement (20) in order to form an LED arrangement, and
• wherein all LED groups (LED A, LED B, LED C, LED D) are part of the resulting LED arrangement, and wherein a capacitor (Ccap1) is charged depending on the voltage angle of the input voltage (Vₗᵢₙₑ), wherein the capacitor (Ccap1) supplies the LEDs during the zero crossings of the input voltage (Vₗᵢₙₑ),
**characterized in that**
a matrix circuit of controllable switching elements that are connected to the inputs and outputs of the LED groups (LED A, LED B, LED C, LED D) forms the switch arrangement, and
wherein, within a predetermined range of the input voltage (Vₗᵢₙₑ), two of the at least four LED groups (LED A, LED B, LED C, LED D) are connected in parallel, and the parallel connection of the two LED groups is connected in series with all further LED groups, wherein
a second LED group (LED B) is connected in parallel in a first time segment of the activation within this range of the input voltage (Vₗᵢₙₑ) of a first LED group (LED A), and
a fourth LED group (LED B) is connected in parallel in a second time segment of the activation within this range of the input voltage (Vₗᵢₙₑ) of a third LED group (LED A).

10. Method according to Claim 9,
**characterized in that**
the current passing through the LED arrangement is regulated.

11. Method according to Claim 10,
**characterized in that**
during a change between two different interconnection states of the LED groups (LED A, LED B, LED C, LED D), a current flow is temporarily interrupted.

12. Method according to any one of Claims 9 to 11,
**characterized in that**
• the capacitor (Ccap1) is charged independently of a current-regulating means (30), wherein the current for supplying the LED groups (LED A, LED B, LED C, LED D) is set by the current-regulating means (30),
• the supplying of the LED groups (LED A, LED B, LED C, LED D) by the capacitor (Ccap1) takes place via the current-regulating means (30),
• and a control of the recharging and/or discharging of the capacitor (Ccap1) that is dependent on the input voltage (Vₗᵢₙₑ) in terms of phase angle, voltage, time, and/or otherwise is enabled.

13. Method according to any one of Claims 9 to 12,
wherein an operation of the LED groups (LED A, LED B, LED C, LED D) is enabled as soon as the forward voltage of an LED group (LED A, LED B, LED C, LED D) is reached at least temporarily,
**characterized in that**
• an operation of the LED groups (LED A, LED B, LED C, LED D) can take place both upon application of an alternating voltage and application of a direct voltage as input voltage (Vₗᵢₙₑ),
• and an operation of the LED groups (LED A, LED B, LED C, LED D) can take place upon application of an input voltage (Vₗᵢₙₑ) within the range from 70 V to 230 V, and the frequency of the input voltage (Vₗᵢₙₑ) can be varied; it preferably can be not only 50 Hz but also 60 Hz.

14. LED module comprising an arrangement according to any one of Claims 1 to 8,
**characterized in that**
the arrangement with the LED groups (LED A, LED B, LED C, LED D) and the switching elements of the switch arrangement (20), and preferably also the control circuit (15), are integrated into the LED module.

## Revendications

1. Dispositif (100) de fonctionnement de DEL, comprenant
• au moins quatre groupes (LED A, LED B, LED C, LED D) de DEL, dans lequel les groupes de DEL (LED A, LED B, LED C, LED D) sont respectivement formés par une chaîne de DEL en série,
• un dispositif commutateur (20) commandable, permettant l'interconnexion interchangeable entre les groupes de DEL (LED A, LED B,
LED C, LED D), afin de former un dispositif DEL et
• un circuit de commande (15), lequel est conçu pour commander le dispositif commutateur (20) en fonction d'une tension d'entrée (Vₗᵢₙₑ) du dispositif (100), pour modifier de manière dynamique l'interconnexion entre les groupes de DEL (LED A, LED B, LED C, LED D) et
• un condensateur (Ccap1), lequel est chargé en fonction de l'angle de tension de la tension d'entrée (Vₗᵢₙₑ), dans lequel le condensateur (Ccap1) alimente les DEL pendant le passage par zéro de la tension d'entrée (Vₗᵢₙₑ)
dans lequel le circuit de commande (15) est conçu pour commander le dispositif commutateur (20) de telle sorte que tous les groupes de DEL (LED A, LED B, LED C, LED D) fassent partie du dispositif DEL qui en résulte,
**caractérisé en ce**
**que** le dispositif commutateur (20) est formé par un circuit matriciel d'éléments de commutation commandables, qui sont reliés aux entrées et aux sorties des groupes de DEL (LED A, LED B, LED C, LED D) et
**que** dans une plage prédéfinie de la tension d'entrée (Vₗᵢₙₑ), le circuit de commande (15) est conçu pour commander le dispositif commutateur (20) de telle sorte que deux des au moins quatre groupes de DEL (LED A, LED B, LED C, LED D) soient commutés en parallèle et que l'interconnexion parallèle des deux groupes de DEL soit commutée en série avec tous les autres groupes de DEL,
dans lequel dans un premier segment partiel de la commande dans cette plage de la tension d'entrée (Vₗᵢₙₑ), un premier groupe de DEL (LED A) est connecté en parallèle à un deuxième groupe de DEL (LED B) et
dans un deuxième segment partiel de la commande dans cette plage de la tension d'entrée (Vₗᵢₙₑ), un troisième groupe de DEL (LED C) est connecté en parallèle à un quatrième groupe de DEL (LED D).

2. Dispositif selon la revendication 1,
**caractérisé en ce**
**que** le dispositif comporte une unité côté entrée (13) pour déterminer un passage par zéro de la tension d'alimentation (Vₗᵢₙₑ), l'unité (13) étant conçue pour envoyer des signaux au circuit de commande (15).

3. Dispositif selon la revendication 1 ou 2,
**caractérisé en ce**
**que** les groupes de DEL (LED A, LED B, LED C, LED D) sont fabriqués de manière identique.

4. Dispositif selon l'une quelconque des revendications précédentes,
**caractérisé en ce**
**qu**'il comporte en outre des moyens de régulation de courant (30).

5. Dispositif selon la revendication 4,
**caractérisé en ce**
**que** les moyens de régulation de courant (30) comprennent des moyens de régulation constante de courant associés aux groupes individuels de DEL (LED A, LED B, LED C, LED D).

6. Dispositif selon la revendication 5,
**caractérisé en ce**
**que** les moyens de régulation de courant (30) du dispositif DEL constitué par les groupes de DEL (LED A, LED B, LED C, LED D) comprennent des moyens de régulation constante de courant connectés en amont ou en aval.

7. Dispositif selon la revendication 5 ou 6,
**caractérisé en ce**
**que** les moyens de régulation constante de courant comprennent un régulateur de courant constant commandable ou un régulateur de courant constant non commandable auquel un élément de commutation est associé.

8. Dispositif selon l'une quelconque des revendications 4 à 7,
**caractérisé en ce**
**que** les éléments de commutation commandables du circuit matriciel sont conçus pour relier les entrées et les sorties des moyens de régulation de courant (30).

9. Procédé de fonctionnement de DEL,
• dans lequel les DEL sont réparties en au moins quatre groupes (LED A, LED B, LED C, LED D) et dans lequel les groupes de DEL (LED A, LED B, LED C, LED D) sont respectivement formés par une chaîne de DEL en série,
• dans lequel en fonction d'une tension d'entrée (Vₗᵢₙₑ), un circuit de commande (15) commande un dispositif commutateur (20) commandable, dans lequel, selon la commande, l'interconnexion des groupes de DEL (LED A, LED B, LED C, LED D) est modifiée de manière dynamique par le dispositif commutateur (20) commandable, afin de former un dispositif DEL et
• dans lequel tous les groupes de DEL (LED A, LED B, LED C, LED D) forment une partie du dispositif DEL qui en résulte et dans lequel un condensateur (Ccap1) est chargé en fonction d'un angle de tension de la tension d'entrée (Vₗᵢₙₑ), dans lequel le condensateur (Ccap1) alimente les DEL pendant le passage par zéro de la tension d'entrée (Vₗᵢₙₑ),
**caractérisé en ce**
**qu'**un circuit matriciel constitué d'éléments de commutation commandables, qui sont reliés aux entrées et aux sorties des groupes de DEL (LED A, LED B, LED C, LED D) forme le dispositif commutateur et
dans lequel dans une plage prédéfinie de la tension d'entrée (Vₗᵢₙₑ), deux des au moins quatre groupes de DEL (LED A, LED B, LED C, LED D) sont commutés en parallèle et l'interconnexion parallèle des deux groupes de DEL est commutée en série avec tous les autres groupes de DEL, dans lequel
dans un premier segment partiel de la commande dans cette plage de la tension d'entrée (Vₗᵢₙₑ), un premier groupe de DEL (LED A) est connecté en parallèle à un deuxième groupe de DEL (LED B) et
dans un deuxième segment partiel de la commande dans cette plage de la tension d'entrée (Vₗᵢₙₑ), un troisième groupe de DEL (LED C) est connecté en parallèle à un quatrième groupe de DEL (LED D).

10. Procédé selon la revendication 9,
**caractérisé en ce**
**que** le courant traversant le dispositif DEL est régulé.

11. Procédé selon la revendication 10,
**caractérisé en ce**
**que** pendant une alternance entre deux états d'interconnexion différents des groupes de DEL (LED A, LED B, LED C, LED D), un flux de courant est temporairement interrompu.

12. Procédé selon l'une quelconque des revendications 9 à 11,
**caractérisé en ce**
• **que** le condensateur (Ccap1) est chargé indépendamment d'un moyen de régulation de courant (30), dans lequel le courant pour l'alimentation des groupes de DEL (LED A, LED B, LED C, LED D) est réglé par le moyen de régulation de courant (30),
• **que** l'alimentation des groupes de DEL (LED A, LED B, LED C, LED D) est effectuée par le condensateur (Ccap1) par le biais du moyen de régulation de courant (30),
• et une commande de la recharge et/ou de la décharge du condensateur (Ccap1) dépendant de l'angle de phase, de la tension, du temps et/ou autres de la tension d'entrée (Vₗᵢₙₑ) est rendue possible.

13. Procédé selon l'une quelconque des revendications 9 à 12,
dans lequel un fonctionnement des groupes de DEL (LED A, LED B, LED C, LED D) est rendu possible dès que la tension en sens direct d'un groupe de DEL (LED A, LED B, LED C, LED D) est atteinte au moins temporairement,
**caractérisé en ce**
• **qu'**un fonctionnement des groupes de DEL (LED A, LED B, LED C, LED D) peut être effectué aussi bien lors de l'application d'une tension alternative que d'une tension continue en guise de tension d'entrée (Vₗᵢₙₑ),
• et un fonctionnement des groupes de DEL (LED A, LED B, LED C, LED D) peut être effectué lors de l'application d'une tension d'entrée (Vₗᵢₙₑ) dans la plage de 70 V à 230 V,
et la fréquence de la tension d'entrée (Vₗᵢₙₑ) peut être modifiée, de préférence aussi bien de 50 Hz que de 60 Hz.

14. Module de DEL présentant un dispositif selon l'une quelconque des revendications 1 à 8,
**caractérisé en ce**
**que** le dispositif, avec les groupes de DEL (LED A, LED B, LED C, LED D) et les éléments de commutation du dispositif commutateur (20) et de préférence également le circuit de commande (15), sont intégrés dans le module de DEL.
